(19) Europäisches Patentamt
European Patent Office
Office européen des brevets

(11) **EP 3 031 853 B1**

(12) **EUROPEAN PATENT SPECIFICATION**

(45) Date of publication and mention
of the grant of the patent:
**22.05.2019   Bulletin 2019/21**

(21) Application number: **14197550.8**

(22) Date of filing: **12.12.2014**

(51) Int Cl.:
**C08L 23/12** *(2006.01)*       **C08L 23/14** *(2006.01)*

(54) **Polypropylene films with improved printability**

Polypropylenfolien mit verbesserter Bedruckbarkeit

Films de polypropylène présentant une meilleure imprimabilité

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.06.2016   Bulletin 2016/24**

(73) Proprietor: **Borealis AG**
**1220 Vienna (AT)**

(72) Inventors:
• **Defoer, Johan**
  **2800 Mechelen (BE)**
• **De Wever, Willem**
  **3500 Hasselt (BE)**

• **Croonen, Sara**
  **3900 Overpelt (BE)**

(74) Representative: **Dehns**
**St. Brides House**
**10 Salisbury Square**
**London EC4Y 8JD (GB)**

(56) References cited:
**EP-A1- 0 353 368        EP-A1- 1 510 547
EP-A1- 1 864 793        EP-A1- 2 275 485
EP-A1- 2 471 858        EP-A2- 0 323 570
US-A1- 2009 087 648**

Printed by Jouve, 75001 PARIS (FR)

## Description

The patent application discloses a polypropylene-plastomer-blend comprising ethylene-based plastomer of ethylene and a C4-10 alpha olefin and final articles made thereof, which show improved printability, improved dyne retention behaviour and improved dyne retention ratio over time.

Further disclosed is a process how to provide compositions and final articles having improved dyne retention behaviour.

## Background information

Films made out of polypropylene random copolymers are very common within the polymer industry and are used in applications that require superior optical properties such as gloss, transparency, surface smoothness, planarity and good tear resistance.

Films made via blown film or cast film extrusion, are widely used for numerous applications, e.g. in food and textiles packaging, flower wrapping, as photo album page protectors, as coating substrates in extrusion coating processes or laminated to other materials in the formation of more complex films.

Such films are known for their good transparency, clarity or gloss and easy processability. They can be produced on high-speed extrusion lines, even with low thicknesses.

While the mechanical, chemical and processing properties make polypropylene the material of choice in a wide range of applications, its chemical inertness and low surface energy pose problems in applications that require printing, coating, bonding or adhesion with other substrates. For these applications it is therefore necessary to subject the polypropylene to a surface-modifying treatment that increases the surface energy.

The surface energy of a polymer is important for wetting and/or contacting a final article with inks, glue or coatings. The higher the surface energy the better the wetting will be.

Ideally the surface energy of the polymer is higher than the surface tension of e.g. the ink used for printing to get a good bonding between the ink, coating or glue with the respective surface.

In printing applications the surface energy needs to be increased from around 30 dyne/cm of untreated polymer articles to around 38 dyne/cm to be printable with solvent-based inks and to around 45 dyne/cm for being printable with water-based inks.

Increasing the surface energy of polypropylene is especially difficult as the energy required to increase the surface energy is much higher than for other polymers.

Suitable methods to increase the surface energy of polypropylene include chemical treatment, flame-treatment, and Corona-treatment. In flame-treatment the polypropylene surface is treated with an oxidizing gas flame. In Corona-treatment the polypropylene surface is treated with air that has been electrically ionized. All methods have in common that oxidized centers are generated, which facilitate the adhesion of inks etc.

Over time the obtained dyne-level will decrease. Within one week from treating the polypropylene a decay of 3 dyne/cm may occur. Subsequently the treated polypropylene may requires a "refresher" treatment before further transformation. This requires an additional handling step and additional effort for the packaging industry.

Hence it is a permanent need of the packaging industry, that the surface energy after surface treatment remains on an elevated level as long as possible, to provide more flexibility within the production and printing processes to achieve satisfying printing quality.

## Description of the prior art:

WO2001077224 relates to improvements in and relating to the preparation of polypropylene based polymers, in particular to the preparation of polypropylene polymers having excellent impact strength as well as high resistance to stress whitening.

The inclusion of plastomers via a blending process is proposed to reduce stress whitening. Polymers produced by the process according to the invention exhibit good impact properties, enhanced stress whitening resistance, and good optical properties (haze) in injection molded specimen.

However, the patent is silent in respect to surface modification and printability.

EP1270651 relates to a polymer film comprising a propylene random copolymer with the comonomer being ethylene or an alpha -olefin, in particular ethylene, having at least four carbon atoms and a total comonomer content of 4.5 to 12 mol%.

A polymer film according the invention shows good optical properties such as high transparency, low haze and high gloss, further good sealing properties, high softness and good slip properties. However, the patent is also silent in respect to surface modification and printability.

WO-2014048546-A1 deals with polypropylene-based objects having an increased surface energy. It is proposed to use phosphor-based antioxidants as e.g. Irgafos PEP-Q to maintain a dyne level of 37 dyne/cm after 20 days.

WO-2008155404-A1 deals with polypropylene with improved response to surface energy increasing treatments and proposes metallocene-catalysed polyethylene to be used as additive. The density of the metallocene-catalysed polyethylene is at least 0.920 g/cm$^3$ or higher. The application however does not contain any examples to show the alleged effect.

WO2011080128A1 describes a process for the production of a corona-treated polyolefin film wherein an antistatic agent having a molecular weight higher than 500 is required.

WO2013045930A1 describes a process for producing a printable film, wherein at a first location the film is subjected to a modified atmosphere dielectric barrier discharge (MADBD) treatment. Inventors clearly concede that the surface energy of the film decreases over time after MADBD treatment. Hence the film is subjected to corona treatment at a second location.

It is well known in the film industry, that additives which migrate to the surface may change the surface properties of the respective article and may have undesired effects in view or the producability of the films (in the sense of fume generation) or deteriorate the processability in the sense of worse sealability.

Within the packaging industry it is further a constant need to increase the logistic flexibility and work with films, which require as few surface treatment steps as possible and/or maintain elevated levels of the higher surface energy for as long time as possible.

One might think on increasing the corona-treatment intensity to have an initial dyne level as high as possible, though such an overtreatment is clearly disadvantageous, as it leads to occurrence of bumps on the polyolefin surfaces and has a deteriorating effect on the adhesion and wettability characteristics.
Overtreatment may further lead to an even more pronounced decrease of the dyne retention.

## Object of the invention

Therefore it is necessary to find a new way for providing polypropylene compositions, which - when converted into films or other final articles and exposed to surface treatment - maintain an elevated level of surface energy, especially when compared to the surface level energy shortly after surface treatment.

Limit values to be achieved directly after Corona treatment are preferably above 54 dyne/cm or higher, like 55 - 60 dyne/cm.

It is a clear target for films in the packaging industry, to provide dyne levels of at least 38 dyne/cm over at least 2 weeks or more, like 3 weeks, to enable printing without any additional surface treatment.

The present inventors have now sought for solutions how to provide polypropylene compositions having improved properties in respect to printability, especially in the sense of facilitating surface treatment and/or maintaining higher level of surface activation.

The present inventors have surprisingly identified a polypropylene-plastomer-blend comprising 80 - 93 wt.% of a polypropylene random copolymer and 7 - 20 wt.% of an ethylene-based plastomer, wherein

- the polypropylene comprises at least 1.0 wt% ethylene as comonomer and does not contain an elastomeric polymer phase dispersed therein and
- the ethylene based plastomer of ethylene and a C4-10 alpha olefin has a density ISO 1183D of 0,915 g/cm$^3$ or below.

In a special embodiment the invention relates to an article made out of the polypropylene-plastomer blend according to any preceding claim, wherein the final article comprises the blend of 80 wt.% - 93 wt.% of a polypropylene random copolymer and 7 - 20 wt.% of an ethylene-based plastomer of ethylene and a C4-10 alpha olefin

In a further special embodiment the invention relates to a process for the production of articles having increased dyne retention, comprising the steps of

    a. providing a polypropylene-plastomer-blend by blending of 80 - 93 wt.% of a polypropylene random copolymer and 7 - 20 wt.% of an ethylene-based plastomer, wherein

- the polypropylene comprises at least 1.0 wt% ethylene as comonomer and does not contain an elastomeric polymer phase dispersed therein and
- the ethylene based plastomer of ethylene and a C4-10 alpha olefin has a density ISO 1183D of 0,915 g/cm$^3$ or below

    b. forming an article out of the polypropylene-plastomer-blend
    c. exposing one or more surface(s) of said article to a treatment that increases the surface energy, and

d. optionally further modifying the surface having increased surface energy by printing, coating or metallisation.

In still a further special embodiment the invention relates to the use of ethylene based plastomers of ethylene and a C4-10 alpha olefin having a density less than 0,915 g/cm$^3$ to improve the dyne retention or the dyne retention ratio DRRx of articles comprising polypropylene, wherein x is defined to be 14 days or more.

**Detailed description:**

In the following the invention is described in more detail.

**Polymer settings**

The polypropylene-plastomer-blend according the present invention comprises a 80 - 93 wt.% of a polypropylene random copolymer and 7 - 20 wt.% of an ethylene-based plastomer, wherein

- the polypropylene comprises at least 1.0 wt% ethylene as comonomer and does not contain an elastomeric polymer phase dispersed therein and
- the ethylene based plastomer of ethylene and a C4-10 alpha olefin has a density ISO 1183D of 0,915 g/cm$^3$ or below.

It is stated, that the relative amounts of polypropylene and ethylene based plastomer are to be seen in relation to the sum of (polypropylene + ethylene based plastomer).

Alternatively, the polypropylene-plastomer-blend according the present invention may comprise 8-18 wt.% of the ethylene-based plastomer, like 9-17 wt.% of the ethylene based plastomer.

The Melt flow rate (MFR$_{230/2.16}$) the polypropylene-plastomer-blend, determined according to ISO1133, can be at most 15.0 g/10 min or below, such as 13.0 g/10 min or below.

The Melt flow rate (MFR$_{230/2.16}$) the polypropylene-plastomer-blend, determined according to ISO1133, can be of at least 0,1 g/10 min or higher, such as at least 1,5 g/10 min or higher.

For the production of cast films, it is preferred, that the Melt flow rate (MFR$_{230/2.16}$) of the polypropylene-plastomer-blend is in the range of 3 to 12.0 g/10min, more preferably in the range of 4,5 to 11,5 g/10min, like in the range of 5.0 to 11.0 g/10min.

For the production of blown films, it is preferred, that the Melt flow rate (MFR$_{230/2.16}$) of the polypropylene-plastomer-blend is in the range of 5 g/10min, or below, more preferably in the range of 4,5 g/10min or below, like in the range of 0,2 - 3,8 g/10min, such as 0.3 - 3,2 g/10 min, or like 0,3 - 2,8 g/10min .

The polypropylene of the polypropylene-plastomer-blend can be a polypropylene-copolymer, comprising at least 1.0 wt% ethylene as comonomer and does not contain an elastomeric polymer phase dispersed therein

Hence the polypropylene of the polypropylene-plastomer-blend can be a propylene- random copolymer or a propylene-terpolymer.

A propylene random copolymer denotes a copolymer of propylene monomer units and comonomer units in which the comonomer units are randomly distributed in the polymeric chain.

Thereby, a propylene random copolymer includes a fraction, which is insoluble in xylene - xylene cold insoluble (XCU) fraction, in an amount of at least 70 wt.%, more preferably of at least 80 wt.%, still more preferably of at least 85 wt.% and most preferably of at least 90 wt.%, based on the total amount of the propylene random copolymer.

Accordingly, the random copolymer does not contain an elastomeric polymer phase dispersed therein.

The propylene random copolymer used in the polypropylene composition of the invention comprises at least 1.0 wt% ethylene as comonomer and does not contain an elastomeric polymer phase dispersed therein Copolymers comprising two or more comonomers are herein defined as terpolymers.

It is envisaged within the present invention that additional comonomers can be present, such as C$_4$ to C$_6$ alpha-olefins. The propylene copolymer may therefore comprise ethylene and one or more comonomers, preferably just one additional comonomer.

In a specific embodiment the terpolymer is a terpolymer of propylene, ethylene and 1-butene only.

The propylene random copolymer or terpolymer used in the polypropylene composition with the comonomer being ethylene and optionally an alpha -olefin having at four to six carbon atoms has a total comonomer content of 1,0 to 12,0 wt.%, like 1,5 - 11,0 wt.%, such as 2,0 - 10,5 wt.%.

In case the propylene random copolymer is used it is further preferred, the total ethylene content of the copolymer is 1,0 wt.% or more, such as 1,5 wt.% or 2,0 wt.% or more. It is further preferred, the total ethylene content of the copolymer is 9,0 wt.% or less. Especially preferred are propylene random copolymers with ethylene contents in the range of 2,5 or 3.0 wt.% to 8,0 wt.% or less, like 3,5 or 4.0 wt.% to 7,0 wt.%

Preferably the terpolymer has a rather high content of propylene (C3), i.e. at least 83.0 wt.%, i.e. equal or more than 86 wt.%, such as 90.0 wt.%, more preferably equal or more than 92.0 wt.%, yet more preferably equal or more than 94.0 wt.%, like equal or more than 94.5 wt.%.

Another preferred requirement of the terpolymer is that the amount of ethylene within the terpolymer is lower compared to the amount of the $C_4$ to $C_6$ α-olefin. Accordingly it is appreciated that the weight ratio of ethylene to the $C_4$ to $C_6$ α-olefin is in the range of 1/100 to below 1/1, more preferably in the range of 1/10 to 1/2, yet more preferably in the range of 1/6 to 1/2.5, like 1/5.5 to 1/2.5.

Accordingly it is preferred that the ethylene content within the terpolymer is in the range of 0.1 to 3.0 wt.%, more preferably in the range of 0.5 to 2.8, like in the range of 0.7 to 1.7 wt.%.

Further it is preferred that the $C_4$ to $C_6$ α-olefin, i.e. the 1-butene or 1-hexene, within the terpolymer is in the range of 1 to 14 wt.%, more preferably in the range of 1.5 to 13, like in the range of 2,0 to 12,0 wt.% or 3,0 wt.% to 11,0 wt.% or 3,0 wt.% to 10 wt.%.

It is especially preferred that the terpolymer of propylene (C3), ethylene (C2) and one C4 to C6 α-olefin has a total comonomer content, i.e. a content of ethylene (C2) and the C4 to - C6 α-olefin together, in the range of 17,0 wt.% or below, like 16,0 wt.% or 14,5 wt.%, such as 4,1 to 13,0 wt.%, preferably of 4,5 to 12,0 wt.%, more preferably of 6,0 to 10,5 wt.%.

The Melt flow rate ($MFR_{230/2.16}$) of the polypropylene comprised in the polypropylene-plastomer-blend, is determined according to ISO1133, and can be in the range of 1.5 to 10.0 g/10min, more preferably in the range of 1.8 to 8,5 g/10min, like in the range of 2.0 to 8.0 g/10min.

The polypropylene (PP) can be further unimodal or multimodal, like bimodal in view of the molecular weight distribution and/or the comonomer content distribution; both unimodal and bimodal polypropylenes are equally preferred.

The polypropylene of the polypropylene-plastomer-blend can be produced by polymerisation in the presence of any conventional coordination catalyst system including Ziegler-Natta, chromium and single site (like metallocene catalyst), preferably in the presence of a Ziegler-Natta catalyst system.

It is envisaged within the scope of the present invention, that the polypropylene of the polypropylene-plastomer-blend can be produced by polymerisation in the presence of polymeric nucleating agents.

The nucleated polypropylene composition in accordance with the present invention is furthermore characterized in that it comprises a polymeric nucleating agent. Any known polymeric nucleating agent may be employed including polymers of vinyl alkanes and vinyl cycloalkanes.

A preferred example of such a polymeric nucleating agent is a vinyl polymer, such as a vinyl polymer derived from monomers of the formula

**CH2 = CH-CHR1R2**

wherein R1 and R2, together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system or independently represent a linear or branched C4-C30 alkane, C4- C20 cycloalkane or C4-C20 aromatic ring. Preferably R1 and R2, together with the C-atom wherein they are attached to, form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer.

Such polymeric nucleating agent can be for instance incorporated by the so called BNT-technology (i.e. in-reactor nucleation).

It is also possible, to use polymers, which already contain the polymeric nucleating agent (so-called master batch technology) in order to introduce the polymeric nucleating agent into the polypropylene of the polypropylene-plastomer-blend of the current invention.

The polypropylene according to the present invention may contain commonly used additives like:

phenolic antioxidants like 2,6-di-tert.buty-4-methylphenol (CAS 128-37-0, BHT); Pentaerithrityl-tetrakis(3-(3',5'-di-tert.butyl-4-hydroxyphenyl)-propionate) (CAS 6683-19-8, Irganox 1010);
Octadecyl-3-(3',5'-ditert.butyl-4-hydroxyphenyl)-propionate) (CAS 2082-79-3, Irganox 1076), phosphorus-containing antioxidants like Tris(2,4-di-tert.butylphenyl)-phosphite (CAS 31570-04-4, Irgafos 168); Bis(2,4-di-tert.butylphenyl)-pentaerithrityl-di-phosphite (CAS 26741-53-7, Ultranox 626),
C-radical scavengers like 5,7-di-tert.butyl-(3-(3,4-di-methylphenyl)3H-benzofuran-2-one (CAS 181314-48-7, HP 136)
acid scavengers like Calcium stearate (CAS 1592-23-0); Zinc stearate (CAS 557-05-1); Hydrotalcite (CAS 11097-59-9)

UV-stabilisers like Bis-(2,2,6,6-tetramethyl-4-piperidyl)-sebacate (CAS 52829-07-9, Tinuvin 770); 2-hydroxy-4-n-octoxy-benzophenone (CAS 1843-05-6, Chimassorb 81)

nucleating agents like sodium benzoate (CAS 532-32-1); 1,3:2,4-bis(3,4-dimethylbenzylidene)sorbitol (CAS 135861-56-2, Millad 3988)

antiblocking agents like natural or synthetic silica (CAS 7631-86-9);

pigments like carbon black, TiO2 or the like

in quantities of 100-10.000 ppm for each single component.

## Plastomer

The plastomer comprised of the polypropylene-plastomer-blend according to the present invention is a very low density polyolefin; more preferably a very low density polyolefin polymerised using single site, preferably metallocene catalyst.

Typically, such polyolefin plastomers are ethylene copolymers, also referred herein as ethylene based plastomer, of ethylene and a C4-10 alpha olefin

The ethylene based plastomer suitable for the current inventions is a copolymer of ethylene and C4 - C10 alpha-olefin.

Suitable C4 - C10 alpha-olefin include 1-butene, 1-hexene and 1-octene, preferably butene or octene and more preferably octene.

Preferably copolymers of ethylene and 1-octene are used.

Suitable ethylene based plastomers have a density in the range of 0.860 - 0.915 g/cm3, preferably in the range of 0.860 to 0.910 g/cm3, more preferably in the range of 0.860 - 905 g/cm3 and most preferably in the range of 0.865 - 885 g/cm3.

The ethylene based plastomers have a melt flow rate MFR190/2.16, of at least 0,5 g/10 min, like 1,0 g/10 min.

The ethylene based plastomer suitable may also have an MFR190/2.16 of less than about 30 g/10 min, like less than 25 g/min, such as less than 21 g/10min, preferably between 1,0 and 18g/10 min and more preferably between 2,5 and 15 g/10 min, such as 3,0 - 12 g/10 min.

The melting points ($T_m$) of suitable ethylene based plastomers (measured with DSC according to ISO 11357-3:1999) are below 130°C, preferably below 120°C, more preferably below 110°C and most preferably below 100°C.

Furthermore suitable ethylene based plastomer have a glass transition temperature Tg (measured with DMTA according to ISO 6721-7) of below -25°C, preferably below -30°C, more preferably below -35°C. the ethylene based plastomer is a copolymer of ethylene and a C4 - C10 alpha olefin and has an ethylene content from 50 to 95 wt.%, preferably from 55 to 90 wt.% and more preferably from 60 to 85 wt.%.

The molecular mass distribution Mw/Mn is most often below 4, such as 3.5 or below, but is at least 1.7. It is preferably between 3 and 1.8.

Ethylene based plastomers suitable for the current invention are commercially available, i.a. from Borealis Plastomers (NL) under the trade name Queo, from DOW Chemical Corp (USA) under the trade name Engage or Affinity, or from Mitsui under the trade name Tafmer.

Alternately these ethylene based plastomers can be prepared by known processes, in a one stage or two stage polymerisation process, comprising solution polymerisation, slurry polymerisation, gas phase polymerisation or combinations therefrom, in the presence of suitable catalysts, like vanadium oxide catalysts or single-site catalysts, e.g. metallocene or constrained geometry catalysts, known to the art skilled persons.

Preferably these ethylene based plastomers are prepared by a one stage or two stage solution polymerisation process, especially by high temperature solution polymerisation process at temperatures higher than 100°C.

Such process is essentially based on polymerising the monomer and a suitable comonomer in a liquid hydrocarbon solvent in which the resulting polymer is soluble. The polymerisation is carried out at a temperature above the melting point of the polymer, as a result of which a polymer solution is obtained. This solution is flashed in order to separate the polymer from the unreacted monomer and the solvent. The solvent is then recovered and recycled in the process.

Preferably the solution polymerisation process is a high temperature solution polymerisation process, using a polymerisation temperature of higher than 100°C. Preferably the polymerisation temperature is at least 110°, more preferably at least 150°C. The polymerisation temperature can be up to 250°C.

The pressure in such a solution polymerisation process is preferably in a range of 10 to 100 bar, preferably 15 to 100 bar and more preferably 20 to 100 bar.

The liquid hydrocarbon solvent used is preferably a C5-12-hydrocarbon which may be unsubstituted or substituted by C1-4 alkyl group such as pentane, methyl pentane, hexane, heptane, octane, cyclohexane, methylcyclohexane and hydrogenated naphtha. More preferably unsubstituted C6-10-hydrocarbon solvents are used.

A known solution technology suitable for the process according to the invention is the COMPACT technology.

Inventors have found that especially good results in view of dyne retention can be achieved, when ethylene based plastomers are used, which have both their density and their MFR on the lower side of the given ranges. So ethylene based plastomer having density of 905 kg/m$^3$ or, like 890 kg/m$^3$ or below and an MFR190/2.16 of at most 10 g/10 min, like 5,0 g/10 min or below are especially preferred.

Plastomer especially useful for improving the dyne retention and the DRR are considered to have a density of 885 kg/m$^3$ or below and an MFR190/2.16 of at most 4,5 or below.

Blends suitable for the present invention can be produced by dry-blending / mixing of the blend partners or by melt mixing of the melt partners.

Dry blending can be done by using tumble-mixers or the like.

Melt mixing and extrusion can be conducted in single- or twin screw extruders, as well as Banbury type mixers, Farrel kneaders or Buss co-kneaders.

The choice for suitabel extruders or kneaders and their operation are within the skill of the person skilled in the art.

In a special embodiment the invention relates to an article made out of the polypropylene-plastomer blend according the present invention, wherein the final article comprises the blend of 80 wt.% - 93 wt.% of a polypropylene random copolymer and 7 - 20 wt.% of an ethylene-based plastomer.

Articles according the present invention can be produced with several known conversion techniques, such as injection moulding or extrusion via blown or cast film technology.

Extruded articles produced via blown or cast film technology, such as blown or cast films, are preferred, extruded articles produced via cast film technology, such as cast films, are especially preferred

Films according to the present invention may be non-oriented, mono-axially or bi-axially oriented.

It is preferred, that the films are non-oriented.

Especially preferred are however cast-films, especially preferred are non-oriented cast films.

Films according to the present invention may be mono- or multilayer films, comprising one or more layers, like two, three or five layers, even up to seven, up to 9 or up to 12 layers, wherein multilayer films are preferred.

Further preferred are multilayer films with 3 or more layers, such as multilayer films with 5 - 7 layers.

In multilayer films comprising the polypropylene plastomer blend of the current invention, the polypropylene plastomer blend of the current invention may be contained by at least one of the layers.

It is envisaged by the invention that the polypropylene-plastomer-blend of the current invention may be also comprised by more than one layer, like two or three layers of the multilayer film. It may be also comprised by all layers of the multilayer film.

However, it is preferred, if the polypropylene blend of the current invention is comprised by at least one or both outer layers so it can be easily exposed to surface treatment.

It is further preferred, that the polypropylene blend of the current invention is comprised by just one outer layer.

It is especially preferred, that any outside layer exposed to surface treatments comprises the polypropylene plastomer blend of the current invention.

It is within the scope of the invention, that the layers comprising the polypropylene plastomer blend of the current invention and being exposed to surface treatment, can be either printed on, laminated or coated with conventional coatings, such as acrylics, PVDF, PUR or the like.

Films according to the present invention are highly suitable for metallisation processes.

Good adhesion with metals is only possible with very high surface energy, at least 38 dyne/cm, e.g. at least 40 or 42 dyne/cm or more.

So the present invention in a specific embodiment covers films, which are suitable for coating or metallisation to provide enhanced barrier properties or better optical appearance.

Said coating or metallisation can be done by sublimation-coating, reactive plasma deposition or atomic layer deposition technology.

Such coating or metallisation can be done by depositing metal, metal-oxide or silicon-oxides onto the film as well as by laminating the polymer film to a metal layer or substrate.

It is also envisaged in the present invention, that the metal layer is sandwiched in between any outside- or carrier layer comprising the polypropylene-plastomer-blend of the current invention. The outside layers can be also be reversed printed when desired.

Suitable compounds for such coating- or metallisation application within the scope of the invention are e.g. aluminium oxide (AlOx), or silicon oxide (SiOx)

The thickness of the metal-coating can be in the range of 5 nm up to 50 nm, preferably in the range of 10 nm to 40 nm, such as 15 nm to 30 nm, or even more preferably in the range of 15 - 25 nm.

Films according to the present invention may have a film thickness of at least 10 to 500 μm, like 15 - 200, more preferably of 20 to 150 μm, like 25 - 120 μm.

When multilayer films are used, then the film thickness of the individual layers may be equally distributed, so in a 5-layer film each layer has 1/5 of the total film thickness.

It is further possible to produce multilayer films, e.g. 3-layer films with a relative layer thickness distribution of (5-20) : (60-90) : (5-20) relative to the final thickness, alternatively (10-20) : (60-80) : (10-20) relative to the final thickness.

Further possible are multilayer films, like 5-layer films with a relative layer thickness distribution of 10:15:50:15:10 relative to the final thickness.

In films produced with multilayer- nano-technologies the layer thickness of the single layers can even be in the range of about 100-250 nm, such as 150 - 200 nm, regardless of the overall film thickness.

In a further special embodiment the invention relates to a process for the production of articles having increased dyne retention, comprising the steps of

   a. providing a polypropylene-plastomer-blend by blending of 80 - 93 wt.% of a polypropylene random copolymer and 7 - 20 wt.% of an ethylene-based plastomer, wherein

   - the polypropylene comprises at least 1.0 wt% ethylene as comonomer and does not contain an elastomeric polymer phase dispersed therein and
   - the ethylene based plastomer of ethylene and a C4-10 alpha olefin has a density ISO 1183D of 0,915 g/cm$^3$ or below

   b. forming an article out of the polypropylene-plastomer-blend
   c. exposing one or more surface(s) of said article to a treatment that increases the surface energy, and optionally
   d. further modifying the surface having increased surface energy by printing, coating or metallisation.

Following their production articles comprising the polypropylene-plastomer-blend are subjected to a surface energy increasing treatment, such as for example chemical treatment, flame-treatment, plasma-treatment and Corona-treatment.

The preferred methods are plasma- and Corona-treatment. The most preferred method is Corona-treatment.

Corona treatment increases the surface energy of the film and consequently its surface tension. The system includes a power source and the treatment station. The power source transform 50/60 Hz plant power into much higher frequency power in a range of 10 to 30 kHz. This higher frequency energy is supplied to the treatment station and is applied to the film surface by means of two electrodes, one with high potential and the other with low potential, through an air gap that typically ranges from 0.5 inches to 1 inch. The surface tension on the film surface is increased when the high potential difference that is generated ionizes the air.

Corona treatment can be done inline or as a separate downstream process once the film is produced. If performed inline, special consideration must be given to the potential generation of toxic ozone. In some cases, it is necessary to provide a ventilation system in the production area.

For flame treatment with a polarized flame an electrical voltage is applied between a burner, serving as the negative pole, and another element, for example a chill roll in film or sheet extrusion. The applied voltage is in the range from about 0.5 kV to about 3 kV. It causes an acceleration of ionized atoms, which hit the polypropylene surface at great speed and then break bonds on the surface of the polypropylene article. In consequence, polar centers are created.

The polypropylene comprising ethylene based plastomer has been found to be more responsive to surface energy increasing treatments.

Very surprisingly, the polypropylene of the present invention has also been found to have a slower decay of the effects of the surface-modifying treatment. Compared to surface energy enhanced articles made from pure polypropylene, the polypropylene articles comprising ethylene based plastomer can be stored for a longer period of time before further transformation, e.g. printing, without having to undergo a "refresher" treatment.

Thus, the ethylene based plastomer is suitable for being used as additive in final articles comprising polypropylene for improving the response to surface energy increasing treatments, such as for example chemical treatment, plasma-, flame-treatment and Corona-treatment, and maintaining elevated levels of dyne retention or high dyne retentions ratios (DRRx) after x days of storage. The preferred surface energy increasing methods are plasma- and Corona-treatment. The most preferred method is Corona-treatment.

Limit values of the dyne-levels to be achieved directly after surface treatment, preferably Corona treatment, are preferably above 54 dyne/cm or higher, like 55 - 60 dyne/cm.

It is a clear target for films in the packaging industry, to provide films with dyne levels of > 38 dyne/cm over at least 14 days or more, like 21 days, to enable printing without any additional surface treatment.

Further preferred are films having dyne levels after 14 days of at least 40 dyne/cm or more, like 42 or 44 dyne/cm or more.

Especially preferred are films having dyne levels after 14 days of 48 dyne/cm or more, such as 50 or more.

For films having been stored for 21 days it is preferred to have dyne levels of at least 40 dyne/cm, such as 42 dyne/cm or more, like 44 dyne/cm or 46 dyne/cm or more.

**Dyne retention ratio DRRx**

The Dyne retention ratio indicates the dyne retention after x days , wherein x represents the days of storage, in relation to the originally dyne retention value determined 6 hours after corona treatment multiplied by 100.

Expressed alternatively

$$\text{DRRx [\%]} = \frac{\text{Dyne retention on day x}}{\text{Dyne retention on day 0}} * 100$$

**Equation 1: Dyne Retention Ratio**

The dyne retention ratio after 14 days ($DRR_{14}$) is preferably at least 70 %, such as at least 72 %. Films having a $DRR_{14}$ of at least 75% or at least 80 % are especially preferred.

The dyne retention ratio after 21 days ($DRR_{21}$) is preferably at least 70%, such as at least 72 % or at least 75%, like at least 80 %.

The formation of the article within the process can be done by any polymer processing technique. Film extrusion processes as laid out above, are however preferred.

The present invention will now be described in further detail by the examples provided below:

**Examples:**

**Measuring methods**

The following definitions of terms and determination methods apply for the above general description of the invention as well as to the below examples unless otherwise defined.

**Melt Flow Rate (MFR)**

The melt flow rates of polypropylenes are measured at 230 °C with a load of 2.16 kg ($MFR_{230/2.16}$) according to ISO 1133

The melt flow rates of ethylene based plastomer are measured at 190 °C with a load of 2.16 kg ($MFR_{190/2.16}$) according to ISO 1133

For the **Calculating the MFR** of the polypropylene-plastomer blends as indicated in **Table 1**, the following formula was applied:

$$\log_{10}[MFR(Blend)] = w1 * \log_{10}(MFR1) + w2 * \log_{10}(MFR2)$$

**Equation 2: Calculated MFR**

wherein w1 and w2 denominate the relative weight fraction of the blend partners, e.g. plastomer and polypropylene resin. MFR1 or MFR2 denominate the MFR of the respective blend partners determined at the same condition, i.e. at the same temperature and loading.

For the polypropylene resin the MFR230/2.16 as measured was applied.

The MFRs of the plastomers are usually measured at lower temperatures, i.e. MFR190/2.16, so the values were multiplied to by factor 1,8 (empirical value) to reflect the (higher) flowability at 230°C.

**Melting temperature $T_m$, crystallisation temperature $T_c$**, is measured with Mettler TA820 differential scanning calorimetry (DSC) on 5-10 mg samples. Both crystallisation and melting curves were obtained during 10 °C/min cooling and heating scans between 30 °C and 225 °C. Melting and crystallisation temperatures were taken as the peaks of endotherms and exotherms.

Also the melt- and crystallisation enthalpy (**Hm and Hc**) were measured by the DSC method according to ISO 11357-3.

**Comonomer determination by NMR spectroscopy**

Quantitative nuclear-magnetic resonance (NMR) spectroscopy was further used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950). With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents. For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E \, [\text{wt.}\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Density**

The density was measured according to ISO 1183D and ISO1872-2 for sample preparation.

**Surface energy and Dyne retention**

Surface energy is determined via wetting tension according to ASTM D2578-09 using test-inks (mixtures of formamide and ethyl cellosolve) with a surface tension in between 34 and 56 dynes/cm, namely "AFS corona treatment tester", supplied by AFS, Augsburg, Germany.
It is important, that the tested surface area is not roughened before wetting but as smooth as possible.
The inks are applied with cotton buds over a surface of 6.5 cm$^2$, starting with a low surface tension-ink until an ink is used, which does not wet the surface anymore The surface tension is then determined visually by estimating how the liquid reacts within the first two seconds following application of the ink onto the surface. The test liquid can shrink and/or form itself into globules (individual droplets) or it can remain unchanged forming an ink-film on the test-film.
When a test liquid shrinks or forms into droplets it indicates that the film has a lower surface energy than the liquid applied.
The test should be repeated as many times as necessary with test-inks having surface tension values of +/- 2 dynes/cm different from the first measured dyne-value, until the marking remains stable for a period of two seconds or more. Once that has been achieved, the film can be said to have that level or surface energy at least equal to that of the liquid applied.
Further applications should be made until shrinkage or droplets occur within two seconds. This last measurement should be taken as failure, and the surface energy of the liquid used for the previous measurement should be taken to be the surface energy of the film.
The surface tension for the inventive and comparative examples was tested daily in the first week, then again at the end of second week and the end of the 3$^{rd}$ week

**Dyne retention ratio DRRx**

Dyne retention ratio DRRx indicates the dyne retention after x days , wherein x represents the days of storage, in relation to the originally dyne retention value determined 6 hours after corona treatment multiplied by 100.

Expressed alternatively

$$DRRx \, [\%] = \frac{\text{Dyne retention on day x}}{\text{Dyne retention on day 0}} * 100$$

**Equation 1: Dyne retention ratio**

**Material description:**

**RD208CF** is a polypropylene-ethylene random copolymer, MFR (230/2.16) of ca 8 g/10 min, Tm of ca 140 °C, C2-content of 4 wt.%, visbroken.
**RD204CF** is a polypropylene-ethylene random copolymer, MFR (230/2.16) of ca 8 g/10 min, Tm of ca. 150 °C, C2-content of 2 wt.%, visbroken.
**HD204CF** is a polypropylene-homo-polymer, MFR (230/2.16) of ca 8 g/10 min, visbroken
**TD210CF** is a polypropylene-ethylene-butylene-terpolymer, MFR (230/2.16) of ca 6 g/10 min, TD210CF contains 200 ppm Ca-stearate as acid-scavenger.

Queo™ 8203 is an ethylene based octene plastomer, MFR(190/2.16) of 3 g/10 min, MWD: unimodal, density 0,882 g/cm$^3$, melting point: 74 °C, produced in a solution polymerisation process using a metallocene catalyst.

Queo™ 8210 is an ethylene based octene plastomer, MFR(190/2.16) of 10 g/10 min, MWD: unimodal, density 0,882 g/cm$^3$, melting point: 75 °C, produced in a solution polymerisation process using a metallocene catalyst.

Queo™ 0203 is an ethylene based octene plastomer, MFR(190/2.16) of 3 g/10 min, MWD: unimodal, density 0,902 g/cm$^3$, melting point: 96 °C, produced in a solution polymerisation process using a metallocene catalyst.

Queo™ 0210 is an ethylene based octene plastomer, MFR(190/2.16) of 10 g/10 min, MWD: unimodal, density 0,902 g/cm$^3$, melting point: 97 °C, produced in a solution polymerisation process using a metallocene catalyst.

Queo™ 2M139 is an ethylene based octene plastomer, Melt Flow Rate (190/2.16) of 6,6 g/10 min, MWD: unimodal, density 0,870 g/cm$^3$, melting point: 43 °C, produced in a solution polymerisation process using a metallocene catalyst.

Queo™ 2M135 is an ethylene based octene plastomer, Melt Flow Rate (190/2.16) of 6,6 g/10 min, MWD: unimodal, density 0,882 g/cm$^3$, melting point: 72 °C, produced in a solution polymerisation process using a metallocene catalyst.

Queo 1007 is an ethylene based octene plastomer, Melt Flow Rate (190/2.16) of 6,6 g/10 min, MWD: unimodal, density 0,910 g/cm$^3$, melting point: 105 °C, produced in a solution polymerisation process using a metallocene catalyst.

All the grades were intentionally free from lubricants or easy migrating substances (except indicated otherwise) to ensure good surface properties.

All products are commercially available from Borealis.

**Vistamaxx 3000** is a commercial product of ExxonMobil Chemicals, which is a propylene-based plastomer having a MFR(230 °C/2.16 kg) of 7 g/10min, a density of 0,871 g/cm$^3$ and an ethylene content of 11 wt.%

**Film Production:**

The films used for the Inventive Examples (IE) and the comparative examples (CE) had a thickness of 50 μm.

They were produced on a Reifenhäuser CAST pilot line, equipped with an extruder type RH241-1-50-25, 50 mm diameter L/D ratio: 25, and an extruder type RT78-1-35-25 35 mm diameter L/D ratio 25; a feeding block with 3 feedings; a coathanger die having a die width of 450 mm, die gap: 0,8 mm. The films were produced via 2 chillrolls, having a diameter of 320 mm each.

Prior to the film extrusion the ethylene based plastomer was dry blended into the polypropylene polymers in the weight-ratios as indicated further below, using a tumble mixer.

The melt temperature of the polypropylene-plastomer blends and the pure polypropylenes was 230°C; the temperature of the chill roll was 20 °C, roll speed: 10 m/min.

Electric pinning via electrostatic charging was applied.

The surface treatment of the films was done using a Corona Generator G20S supplied by AFS, the energy loading was 800 W for all samples, frequency used was in the range of 26 kHz to 28 kHz. Care was taken that the distance of the charging bar to the film was equal over the whole width of the film. Film speed at corona treatment was 10 m/min.

**Table 1: Calculated MFR and Dyne retention [dyne/cm]**

| Days → Plastomer in RD208CF ↓ | | Calculated MFR g/10' (230°C/2,16kg) | 0 | 7 | 14 | 21 |
|---|---|---|---|---|---|---|
| 0% | CE | 8,0 | 56 | 40 | 38 | 38 |
| 5 % 0210 | CE | 8,3 | 56 | 40 | 38 | * |
| 10 % 0210 | IE | 8,7 | 56 | 46 | 44 | 42 |
| 15 % 0210 | IE | 9,0 | 56 | 48 | 46 | 46 |
| 5 % 8203 | CE | 7,8 | 56 | 42 | 38 | 38 |
| 10 % 8203 | IE | 7,7 | 54 | 52 | 52 | 44 |
| 15 % 8203 | IE | 7,5 | 56 | 50 | 50 | 50 |
| 10 % 0203 | IE | 7,7 | 56 | 48 | 46 | 46 |
| 15 % 0203 | IE | 7,5 | 56 | 52 | 50 | 50 |

(continued)

| Days → Plastomer in RD208CF ↓ | | Calculated MFR g/10' (230°C/2,16kg) | 0 | 7 | 14 | 21 |
|---|---|---|---|---|---|---|
| 10 % 8210 | IE | 8,7 | 56 | 46 | 44 | 44 |
| 10 % 2M139 | Ie | 8,3 | 56 | 48 | 48 | 46 |
| 15 % 2M139 | IE | 8,5 | 56 | 48 | 48 | 46 |
| 15 % 1007 | IE | 8,5 | 56 | 54 | 52 | 46 |
| 15 % 2M135 | IE | 8,5 | 56 | 46 | 44 | 42 |
| 15 % Vistamaxx 3000 | CE | *n.m. | 56 | 40 | 40 | 36 |
| * value not measured | | | | | | |

**Table 2: Dyne retention ratio** after x days (DRRx [%]), with RD208CF as matrix polymer:

| Days → Plastomer in RD208CF ↓ | | 0 | 7 | 14 | 21 |
|---|---|---|---|---|---|
| 0% | CE | 100 | 71 | 68 | 68 |
| 5 % 0210 | CE | 100 | 71 | 68 | * nm |
| 10 % 0210 | IE | 100 | 82 | 79 | 75 |
| 15 % 0210 | IE | 100 | 86 | 82 | 82 |
| | | | | | |
| 5 % 8203 | CE | 100 | 75 | 68 | 68 |
| 10 % 8203 | IE | 100 | 96 | 96 | 81 |
| 15 % 8203 | IE | 100 | 89 | 89 | 89 |
| 10 % 0203 | IE | 100 | 86 | 82 | 82 |
| 15 % 0203 | IE | 100 | 93 | 89 | 89 |
| 10 % 8210 | IE | 100 | 82 | 79 | 79 |
| 10 % 2M139 | Ie | 100 | 86 | 86 | 82 |
| 15 % 2M139 | IE | 100 | 86 | 86 | 82 |
| 15 % 1007 | IE | 100 | 96 | 93 | 82 |
| 15 % 2M135 | IE | 100 | 82 | 79 | 75 |
| 15 % Vistamaxx 3000 | CE | 100 | 71 | 71 | 64 |
| *n.m.: value not measured | | | | | |

## Claims

1. Polypropylene-plastomer-blend comprising 80 - 93 wt.% of a polypropylene random copolymer and 7 - 20 wt.% of an ethylene-based plastomer, wherein

   - the polypropylene random copolymer comprises at least 1.0 wt% ethylene as comonomer and does not contain an elastomeric polymer phase dispersed therein; and
   - the ethylene based plastomer is an ethylene-based plastomer of ethylene and a C4-10 alpha olefin having a density ISO 1183D of 0,915 g/cm$^3$ or below.

2. Polypropylene-plastomer-blend according to claim 1, wherein the MFR(230/2.16) of the polypropylene-plastomer-blend according to ISO 1133 is 15 g/10 min or below.

3. Article made out of the polypropylene-plastomer blend according to any preceding claim, wherein the final article comprises the blend of claim 1 or 2.

4. Article according to claim 3, wherein the article is produced via blown film or cast film production.

5. Blown or cast film comprising the polypropylene-plastomer blend according to claim 1 or 2 wherein the blown or cast film has a dyne retention of > 38 dyne/cm measured according to ASTM D2578-09 14 days or more after surface treatment.

6. Article or film according to any of claims 3 to 5 wherein in the article has a dyne retention ratio ($DDR_x$) after surface treatment of at least 70 % or more, wherein x is defined to be 14 days or more.

7. Process for the production of articles having increased dyne retention, comprising the steps of

> a. providing a polypropylene-plastomer-blend as claimed in claim 1;
> b. forming an article out of the polypropylene-plastomer-blend
> c. exposing one or more surface(s) of said article to a treatment that increases the surface energy,
> and optionally
> d. further modifying the surface having increased surface energy by printing, coating or metallisation.

8. Use of ethylene based plastomers of ethylene and a C4-10 alpha olefin having a density less than 0,915 g/cm$^3$ to improve the dyne retention or the dyne retention ratio DRRx of articles comprising a polypropylene-plastomer-blend as claimed in claim 1, wherein x is defined to be 14 days or more.


**Patentansprüche**

1. Polypropylen-Plastomer-Mischung, die 80-93 Gew.-% eines statistischen Polypropylen-Copolymers und 7-20 Gew.-% eines auf Ethylen basierenden Plastomers umfasst, wobei

> - das statistische Polypropylen-Copolymer mindestens 1,0 Gew.-% Ethylen als Comonomer umfasst und keine darin dispergierte elastomere Polymer-Phase enthält; und
> - das auf Ethylen basierende Plastomer ein auf Ethylen basierendes Plastomer aus Ethylen und einem C4-10-Alpha-Olefin mit einer Dichte nach ISO 1183D von 0,915 g/cm$^3$ oder weniger ist.

2. Polypropylen-Plastomer-Mischung nach Anspruch 1, wobei die MFR (230/2,16) der Polypropylen-Plastomer-Mischung nach ISO 1133 15 g/10 min oder weniger beträgt.

3. Gegenstand aus der Polypropylen-Plastomer-Mischung nach einem der vorstehenden Ansprüche, wobei der fertige Gegenstand die Mischung nach Anspruch 1 oder 2 umfasst.

4. Gegenstand nach Anspruch 3, wobei der Gegenstand durch Blasfolien- oder Gießfolienproduktion hergestellt ist.

5. Blas- oder Gießfolie, umfassend die Polypropylen-Plastomer-Mischung nach Anspruch 1 oder 2, wobei die Blas- oder Gießfolie 14 Tage oder mehr nach Oberflächenbehandlung eine nach ASTM D2578-09 gemessene Dyn-Retention von > 38 dyne/cm aufweist.

6. Gegenstand oder Folie nach einem der Ansprüche 3 bis 5, wobei der Gegenstand ein Dyn-Retentionverhältnis ($DDR_x$) nach Oberflächenbehandlung von mindestens 70 % oder mehr aufweist, wobei x als 14 Tage oder mehr definiert ist.

7. Verfahren zur Herstellung von Gegenständen mit erhöhter Dyn-Retention, umfassend die Schritte

> a. Bereitstellen einer Polypropylen-Plastomer-Mischung nach Anspruch 1;
> b. Formen eines Gegenstandes aus der Polypropylen-Plastomer-Mischung
> c. Unterziehen einer oder mehrerer Oberfläche(n) des Gegenstands einer Behandlung, die die Oberflächenenergie erhöht,
und optional
d. weiteres Modifizieren der Oberfläche, die eine erhöhte Oberflächenenergie aufweist, durch Bedrucken, Beschichten oder Metallisieren.

**8.** Verwendung von auf Ethylen basierenden Plastomeren aus Ethylen und einem C4-10-Alpha-Olefin mit einer Dichte von weniger als 0,915 g/cm$^3$ zur Verbesserung der Dyn-Retention oder des Dyn-Retentionsverhältnisses DDRx von Gegenständen, die eine Polypropylen-Plastomer-Mischung nach Anspruch 1 umfassen, wobei x als 14 Tage oder mehr definiert ist.


**Revendications**

**1.** Mélange de plastomère-polypropylène comprenant 80 à 93 % en poids d'un copolymère statistique de polypropylène et 7 à 20 % en poids d'un plastomère à base d'éthylène, dans lequel

- le copolymère statistique de polypropylène comprend au moins 1,0 % en poids d'éthylène en tant que comonomère et ne contient pas de phase polymère élastomère dispersée dans celui-ci ; et
- le plastomère à base d'éthylène est un plastomère d'éthylène à base d'éthylène et d'une alpha-oléfine en C4-10 ayant une densité ISO 1183D de 0,915 g/cm$^3$ ou moins.

**2.** Mélange de plastomère-polypropylène selon la revendication 1, dans lequel le MFR(230/2,16) du mélange de plastomère-polypropylène selon ISO 1133 est de 15 g/10 min ou moins.

**3.** Article fabriqué à partir du mélange de plastomère-polypropylène selon l'une quelconque des revendications précédentes, dans lequel l'article final comprend le mélange de la revendication 1 ou 2.

**4.** Article selon la revendication 3, dans lequel l'article est produit via une production de film soufflé ou de film coulé.

**5.** Film soufflé ou coulé comprenant le mélange de plastomère-polypropylène selon la revendication 1 ou 2, dans lequel le film soufflé ou coulé a une rétention de dyne de > 38 dynes/cm mesurée selon ASTM D2578-09 de 14 jours ou plus après traitement de surface.

**6.** Article ou film selon l'une quelconque des revendications 3 à 5, dans lequel l'article a un taux de rétention de dyne (DDR$_x$) après traitement de surface d'au moins 70 % ou plus, dans lequel x est défini comme étant 14 jours ou plus.

**7.** Procédé de fabrication d'articles à rétention de dyne augmentée, comprenant les étapes consistant à

a) fournir un mélange de plastomère-polypropylène tel que revendiqué dans la revendication 1 ;
b) former un article à partir du mélange de plastomère-polypropylène
c) exposer une ou plusieurs surface(s) dudit article à un traitement qui augmente l'énergie de surface, et optionnellement
d) modifier en outre la surface ayant une énergie de surface augmentée par impression, revêtement ou métallisation.

**8.** Utilisation de plastomères d'éthylène à base d'éthylène et d'une alpha-oléfine en C4-10 ayant une densité inférieure à 0,915 g/cm$^3$ pour améliorer la rétention de dyne ou le taux de rétention de dyne DRRx d'articles comprenant un mélange de plastomère-polypropylène tel que revendiqué dans la revendication 1, dans lequel x est défini comme étant 14 jours ou plus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2001077224 A
- EP 1270651 A
- WO 2014048546 A1
- WO 2008155404 A1
- WO 2011080128 A1
- WO 2013045930 A1

### Non-patent literature cited in the description

- *CHEMICAL ABSTRACTS,* 128-37-0
- *CHEMICAL ABSTRACTS,* 6683-19-8
- *CHEMICAL ABSTRACTS,* 2082-79-3
- *CHEMICAL ABSTRACTS,* 31570-04-4
- *CHEMICAL ABSTRACTS,* 26741-53-7
- *CHEMICAL ABSTRACTS,* 181314-48-7
- *CHEMICAL ABSTRACTS,* 1592-23-0
- *CHEMICAL ABSTRACTS,* 557-05-1
- *CHEMICAL ABSTRACTS,* 11097-59-9
- *CHEMICAL ABSTRACTS,* 52829-07-9
- *CHEMICAL ABSTRACTS,* 1843-05-6
- *CHEMICAL ABSTRACTS,* 532-32-1
- *CHEMICAL ABSTRACTS,* 135861-56-2
- *CHEMICAL ABSTRACTS,* 7631-86-9
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **CHENG, H. N.** *Macromolecules,* 1984, vol. 17, 1950
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W-J. ; ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150